**Europäisches Patentamt**

**European Patent Office**

**Office européen des brevets**

(19)

(11) Veröffentlichungsnummer: **0 314 058 B1**

# EUROPÄISCHE PATENTSCHRIFT

(12)

(45) Veröffentlichungstag der Patentschrift: **29.07.92**

(51) Int. Cl.⁵: **B01J 23/56**, B01J 23/89, B01D 53/36

(21) Anmeldenummer: **88117724.0**

(22) Anmeldetag: **25.10.88**

(54) **Platin-freier Dreiweg-Katalysator.**

(30) Priorität: **30.10.87 DE 3736811**

(43) Veröffentlichungstag der Anmeldung:
**03.05.89 Patentblatt 89/18**

(45) Bekanntmachung des Hinweises auf die
Patenterteilung:
**29.07.92 Patentblatt 92/31**

(84) Benannte Vertragsstaaten:
**AT BE CH DE ES FR GB GR IT LI LU NL SE**

(56) Entgegenhaltungen:
**EP-A- 0 142 858**
**EP-A- 0 152 052**
**DE-A- 3 223 500**
**FR-A- 2 253 562**
**FR-A- 2 449 475**

(73) Patentinhaber: **Degussa Aktiengesellschaft**
**Weissfrauenstrasse 9**
**W-6000 Frankturt am Main 1(DE)**

(72) Erfinder: **Koberstein, Edgar, Dr.**
**Wolfskernstrasse 8**
**W-8755 Alzenau(DE)**
Erfinder: **Engler, Bernd, Dr.**
**Treuener Strasse 2**
**W-6450 Hanau 9(DE)**
Erfinder: **Domesle, Rainer, Dr.**
**Wingertstrasse 202**
**W-6457 Maintal 1(DE)**
Erfinder: **Völker, Herbert**
**Bogenstrasse 43**
**W-6450 Hanau 11(DE)**

EP 0 314 058 B1

**Beschreibung**

Die Erfindung betrifft einen Platin-freien Katalysator mit einem wabenförmigen inerten Träger aus Keramik oder Metall, einem Überzug aus Aluminiumoxid der Übergangsreihe, einer auf den Überzug aufgebrachten aktiven Phase aus 0,03 - 3 Gew.-% Palladium und Rhodium mit einem Gewichtsverhältnis zwischen diesen Elementen von 1 : 1 bis 20 : 1 sowie einem Gehalt an Cerdioxid von 25 - 50 Gew.-%, wobei sich die Gewichtsmengen von Edelmetall, Cerdioxid und Aluminiumoxid auf 100 Gew.-% ergänzen.

Aufgrund der in letzter Zeit stark angestiegenen Platinpreise entstand für die Hersteller von Katalysatoren zur Reinigung der Abgase von Verbrennungskraftmaschinen das Bedürfnis, Rhodium-haltige Katalysatorzusammensetzungen, welche unter Verzicht auf Platin eine äquivalente Konversion der in den Abgasen von Verbrennungskraftmaschinen enthaltenen Schadstoffe Co, Kohlenwasserstoffe und Stickoxide gestatten, zu entwickeln.

Dabei läßt sich ein vollständiger Austausch des Platins in Rhodium-haltigen Formulierungen vollziehen, wenn unter Beibehaltung der dabei üblichen Edelmetallmengen das Platin durch Palladium in Verbindung mit einer hohen Cerdioxid-Menge ersetzt wird.

Gegenstand der Erfindung ist demgemäß ein Platin-freier Katalysator mit einem wabenformigen inerten Träger aus Keramik oder Metall, einem Überzug aus Aluminiumoxid der Übergangsreihe, einer auf den Überzug aufgebrachten aktiven Phase aus 0,03 - 3 Gew.-% Palladium und Rhodium mit einem Gewichtsverhältnis zwischen diesen Elementen von 1 : 1 bis 20 : 1 sowie einem Gehalt an Cerdioxid von 25 - 50 Gew.-%, wobei sich die Gewichtsmengen von Edelmetall, Cerdioxid und Aluminiumoxid auf 100 Gew.-% ergänzen.

Der Katalysator ist gekennzeichnet durch einen schichtartigen Aufbau des Überzugs, wobei die erste, untere Schicht Palladium und Cerdioxid und die zweite, obere Schicht Rhodium und Cerdioxid enthält.

In der EP-A-0 142 858 ist zwar bereits ein platinfreier Dreiwegekatalysator beschrieben, mit einem wabenförmigen inerten Träger aus Keramik, einem Überzug aus aktivem Cerdioxid-dotiertem Aluminiumoxid und Cerdioxid, wobei die Gesamtmenge an $CeO_2$ 20 Gew.-% des Überzugs beträgt sowie einer auf den Überzug aufgebrachten aktiven Phase aus Palladium und Rhodium in an sich üblichen Mengen. In dem bekannten Katalysator sind die Edelmetalle in einer einzigen Schicht des Überzugs gleichmäßig verteilt.

Ferner ist in der EP-A-0 152 052 ebenfalls bereits ein platinfreier Dreiwegekatalysator beschrieben mit einem wabenförmigen inerten Träger aus Keramik oder Metall, einem Überzug aus aktivem Aluminiumoxid sowie mindestens einem Platingruppenelement von Platin, Palladium und Rhodium und pulverförmigem Cerhydroxid.

Nach einem Ausführungsbeispiel soll ein Platin und Rhodium enthaltender Katalysator so aufgebaut sein, daß Platin und Cerhydroxid in einer ersten Überzugsschicht und Rhodium in einer darauf angeordneten, Cerdioxidfreien zweiten Überzugsschicht enthalten sind. Platin und Palladium können nach der Beschreibung des Dokuments gegeneinander ausgetauscht werden. Im Gegensatz dazu enthalten beide Schichten des erfindungsgemäßen Katalysators Cerdioxid.

Als Aluminiumoxid der Übergangsreihe kommen im Rahmen der Erfindung alle Kristallmodifikationen von $Al_2O_3$ (einzeln oder im Gemisch) mit Ausnahme des $\alpha$-$Al_2O_3$ in Betracht, wobei die spezifische Oberfläche nach BET zwischen 40 und 250 $m^2/g$ betragen kann.

Es zeigt sich, daß in der Dreierkombination $Pd/Rh/CeO_2$ die Funktion der Edelmetallkomponente bei Einsatz gebräuchlicher Rhodiummengen auf dasselbe Niveau wie bei üblichen, Platin, Rhodium und Cerdioxid enthaltenden Formulierungen gebracht werden kann, sofern die erhöhten Cerdioxidmengen und der beschriebene zweischichtige Aufbau des Überzugs zur Anwendung kommen. Für die Edelmetallkomponenten werden die gebräuchlichen Ausgangsstoffe in Form wasserlöslicher Salze eingesetzt. In den erfindungsgemäßen Katalysatoren können zum Zwecke der Aktivitätssteigerung, der Hochtemperaturbeständigkeit, der sog. Magerstabilität bei Abgaszusammensetzungen von $\lambda > 1$ und der Dauerstandsfestigkeit im Betrieb, bis zu 20 Gew.% der Aluminiumoxidmenge durch die Promotoren Zirkondioxid, Lanthanoxid $La_2O_3$ Neodymoxid $Nd_2O_3$, Praseodymoxid $Pr_6O_{11}$ und/oder Nickeloxid NiO als Einzelsubstanz ersetzt sein.

Bei Verwendung oder Mitverwendung von Nickeloxid NiO resultiert ferner eine Anhebung der Kohlenwasserstoffkonversion und Stickoxidkonversion im fetten Abgasbereich und eine wesentliche Minderung der im Fettbetrieb, (d. h. bei $\lambda < 1$) auftretenden unerwünschten Emission von Schwefelwasserstoff.

Für die Einbringung der wichtigen Modifikationskomponente Cerdioxid $CeO_2$ in den notwendigen hohen Konzentrationen ist neben Cernitrat, Ammoniumcernitrat, Ceroxalat, Cerchlorid, Cercarbonat, Ceroxid oder Cerhydroxid und weiteren Cerverbindungen vor allem Cer(III)acetat geeignet. Es kann in Form wäßriger Imprägnierlösungen zur Fertigung der Monolith- bzw. Wabenkatalysatoren eingesetzt werden.

Es besteht aber auch die Möglichkeit, alle genannten Verbindungen in Form von Feststoffen dem

2

Aluminiumoxid beizumischen.

Eine bevorzugte Ausführungsform der Erfindung sieht vor, das Gitter des Aluminiumoxids durch Erdalkalimetalloxid, Siliciumdioxid, Zirkondioxid oder durch Oxide der Seltenen Erden in an sich bekannter Weise vorzustabilisieren.

Weiterhin hat es sich als vorteilhaft erwiesen, daß die Temperung der edelmetallhaltigen Schichten in einem Wasserstoff enthaltenden Gasstrom erfolgt.

Im Rahmen der Erfindung ist die Maßnahme zur Separierung der beiden Edelmetalle voneinander wichtig für die Erhaltung der spezifischen Eigenwirkungen jedes Metalls in Verbindung mit Cerdioxid.

Ein zusätzlicher Vorteil der erfindungsgemäßen Pd/Rh Dreiwegkatalysatoren mit hohem Ceroxidgehalt besteht darin, daß sie gegenüber herkömmlichen Pt/Rh-Katalysatoren eine geringere Schwefelwasserstoffemission bei Fettbetrieb aufweisen.

Ein weiterer Gegenstand der Erfindung besteht in einem Herstellungsverfahren für den Katalysator. Das Verfahren ist gekennzeichnet durch Überziehen des inerten Trägers mittels einer eine lösliche und/oder eine unlösliche Cerverbindung sowie gegebenenfalls Verbindungen der Promotorelemente enthaltenden wäßrigen Aluminiumoxiddispersion, Trocknen und Tempern dieser ersten $Al_2O_3$-Schicht an Luft bei 300 - 950° C sowie Imprägnieren dieser ersten Schicht mit einer wäßrigen Palladiumsalzlösung, Trocknen und gegebenenfalls Zwischentempern, entsprechende Erzeugung einer zweiten, Cer- und gegebenenfalls Promotoren enthaltenden $Al_2O_3$-Schicht und Imprägnieren dieser zweiten $Al_2O_3$-Schicht mit wäßriger Rhodiumsalzlösung, Trocknen und abschliessendes Tempern der edelmetallhaltigen Schichten bei Temperaturen oberhalb 250° C gegebenenfalls in einem Wasserstoff enthaltenden Gasstrom.

In dem Verfahren kann das Cerdioxid mit Vorteil als Cer(III)acetat eingebracht werden.

Eine günstige Ausführungsform sieht des weiteren vor, durch Erdalkalimetalloxid, Siliciumdioxid, Zirkondioxid oder durch Oxide der Seltenen Erden in an sich bekannter Weise vorstabilisiertes Aluminiumoxid einzusetzen.

Ein weiterer Gegenstand der Erfindung betrifft die Verwendung des vorgestellten Katalysators zur gleichzeitigen Konversion von Kohlenmonoxid, Kohlenwasserstoffen und Stickoxid aus den Abgasen von Verbrennungskraftmaschinen.

Die Erfindung wird nachfolgend durch Ausführungsbeispiele weiter erläutert.

Vergleichsbeispiel 1

Ein Wabenkörper aus Cordierit mit 62 Zellen/cm², 102 mm Durchmesser und 152 mm Länge wurde durch Tauchen in eine 35 %ige wäßrige Suspension, die $\gamma$-$Al_2O_3$ (120 m²/g), Cer(III)acetat und Zirkonylacetat enthielt und in der diese Stoffe - gerechnet als Oxide - im Verhältnis $Al_2O_3$ : $CeO_2$ : $ZrO_2$ = 58 : 39 : 3 vorlagen, beschichtet. Überschüssige Suspension wurde durch Ausblasen entfernt und der beschichtete Monolith nach dem Trocknen bei 120° C 2 h bei 600° C getempert, wobei aus den Acetaten $CeO_2$ und $ZrO_2$ entsteht. Die aufgebrachte Beschichtung setzte sich aus 126,5 g $Al_2O_3$, 85 g $CeO_2$ und 6,5 g $ZrO_2$ zusammen. Der so beschichtete Wabenkörper wurde anschließend mit einer wäßrigen Lösung, die 0,88 g Pd in Form von $Pd(NO_3)_2$ und 0,53 g Rh in Form $RhCl_3$ enthielt, durch Imprägnieren belegt.

Nach der Trocknung des edelmetallimprägnierten Monolithen erfolgte eine 4-stündige Reduktion in Formiergas ($N_2$ : $H_2$ = 95 : 5) bei 550° C.

Vergleichsbeispiel 2

Es wurde ein Katalysator nach Vergleichsbeispiel 1 hergestellt mit dem einzigen Unterschied, daß nun 1,18 g Pd und 0,23 g Rh aufgebracht wurden.

Vergleichsbeispiel 3

Ein Wabenkörper wurde wie in Vergleichsbeispiel 1 beschrieben, mit einer Oxidauflage versehen. Anschließend wurde anstelle von Pd und Rh, jedoch unter gleichen Herstellungsbedingungen 1,18 g Pt in Form von $H_2PtCl_6$ und 0,23 g Rh in Form von $RhCl_3$ durch Imprägnieren aufgebracht.

Vergleichsbeispiel 4

Es wurde ein Wabenkörper entsprechend Vergleichsbeispiel 2 hergestellt mit dem Unterschied, daß diesmal kein Zirkonylacetat in der Suspension enthalten war.

### Vergleichsbeispiel 5

Ein keramischer Wabenkörper nach Vergleichsbeispiel 2 wurde mit einer 40 %igen wäßrigen Suspension beschichtet, die $CeO_2$ und $\gamma$-$Al_2O_3$ (120 m$^2$/g) im Verhältnis 39 : 61 enthielt. Nach Temperung waren 134,5 g $Al_2O_3$ und 85 g $CeO_2$ aufgebracht. Die übrigen Herstellungsparameter entsprachen Vergleichsbeispiel 2.

### Vergleichsbeispiel 6

Aus den gemäß Vergleichsbeispielen 1 - 5 hergestellten Katalysatoren wurden parallel zu den Zellen zylindrische Probekörper mit 38 mm Durchmesser ausgebohrt, in einen Mehrkammertestreaktor eingebaut und im Abgasstrom eines Ottomotors hinsichtlich ihrer Funktion als Dreiwegkatalysator überprüft.

Als Testmotor diente ein 4-Zylindereinspritzmotor mit 1781 cm$^3$ Hubvolumen, ausgerüstet mit einer K-JETRONIC der Fa. Bosch.

Zur Beurteilung der Tieftemperaturaktivität der Katalysatoren wurde diejenige Temperatur bestimmt, bei der jeweils 50 % des im Abgasstrom enthaltenden Kohlenmonoxids und der Kohlenwasserstoffe ($\lambda$ = 1,02) sowie der Stickoxide ($\lambda$ = 0,985) umgesetzt werden.

Daneben wurde die katalytische Aktivität bei 450°C in einem dynamischen Test bei einer Wobbelfrequenz von 1 Hz und einer $\lambda$-Schwankungsbreite von 0,034 gemessen.

Die Raumgeschwindigkeit betrug dabei 64000 h$^{-1}$. Vor Katalysator variierte die Abgaszusammensetzung wie folgt

| | |
|---|---|
| CO | 2,4 - 1,4 Vol.% |
| HC | 450 - 350 ppm |
| $NO_x$ | 2500 - 2000 ppm |
| $O_2$ | 1,0 Vol.% |
| $CO_2$ | 13 - 14 Vol.% |

Zur Ermittlung des Dauerstandsverhaltens wurden die Katalysatoren über 200 h am Motor bei Abgastemperaturen zwischen 450 und 850°C betrieben.

Die Ergebnisse dieser Untersuchungen mit den erfindungsgemäßen Katalysatoren sind zusammen mit demjenigen des Vergleichskatalysators in Tabelle 1 enthalten.

Wie die Meßwerte zeigen, sind die erfindungsgemäßen Pd/Rh-Katalysatoren nach den Vergleichsbeispielen 1, 2, 4 und 5 dem Pt/Rh-Katalysator des Vergleichsbeispiels 3 sowohl im Frischzustand als auch nach 200 h Motoralterung ebenbürtig.

Die folgenden Vergleichsbeispiele 7 - 9 sollen zeigen, daß die Pd/Rh-Dreiwegkatalysatoren sogar eine höhere katalytische Aktivität als handelsübliche Pt/Rh-Dreiwegkatalysatoren, wie sie z. B. in der deutschen Patentschrift 29 07 108 beschrieben sind, aufweisen.

### Vergleichsbeispiel 7

Ein keramischer Monolith mit 62 Zellen/cm$^2$, 102 mm Durchmesser und 152 mm Länge wurde durch Eintauchen mit einer Suspension belegt, die $\gamma$-$Al_2O_3$ (150 m$^2$/g), Ceracetat und Zirkonylnitrat im Verhältnis der Oxide $Al_2O_3$ : $CeO_2$ : $ZrO_2$ = 65 : 28 : 7 enthielt.

Nach dem Ausblasen überschüssiger Suspension wurde der beschichtete Wabenkörper bei 120°C getrocknet und 1 h bei 900°C aktiviert.

Die Beschichtungsmenge betrug 135 g $Al_2O_3$, 58 g $CeO_2$ und 14,5 g $ZrO_2$. Auf diesem mit Trägermaterial versehenen Monolithen wurde anschließend aus wäßriger Lösung 1,47 g Pd in Form von $PdCl_2$ und 0,29 g Rh in Form von $RhCl_3$ durch Imprägnieren aufgebracht. Im Anschluß an die Trocknung des imprägnierten Formkörpers bei 150°C erfolgte eine zweistündige Reduktion bei 500°C im Wasserstoffstrom.

### Vergleichsbeispiel 8

Der Vergleichskatalysator entsprach in Abmessungen und Herstellungsbedingungen dem Katalysatormuster aus Vergleichsbeispiel 7. Er unterschied sich davon aber durch die Zusammensetzung des Trägermaterials (139 g $Al_2O_3$,

10 g $CeO_2$, 12 g $ZrO_2$ und 6 g $Fe_2O_3$), das aus einer wäßrigen Suspension aus $\gamma$-$Al_2O_3$ (150 $m^2/g$), Ceracetat, Zirkonylacetat und Eisenoxid $Fe_2O_3$ aufgebracht wurde sowie dadurch, daß statt Pd nun dieselbe Menge Pt in Form von $H_2PtCl_6$ aufimprägniert wurde.

Vergleichsbeispiel 9

Die nach den Vergleichsbeispielen 7 und 8 hergestellten Katalysatoren wurden nacheinander im Abgasstrom eines Ottomotors hinsichtlich der Wirkung als Dreiwegkatalysator geprüft. Die Testbedingungen entsprachen den in Vergleichsbeispiel 6 geschilderten mit der Ausnahme, daß zur Bestimmung der dynamischen Konvertierung eine $\lambda$-Schwankungsbreite von 0,068 und eine Raumgeschwindigkeit von 73000 $h^{-1}$ zugrundegelegt wurde.

Daher lag nun folgende Abgaszusammensetzung vor:

| | |
|---|---|
| CO | 3,3 - 2,2 Vol.% |
| HC | 510 - 420 ppm |
| $NO_x$ | 1500 - 2100 ppm |
| $O_2$ | 1,65 Vol.% |
| $CO_2$ | 12 - 13 Vol.% |

Die Schadstoffkonvertierungen der Katalysatoren wurden im Frischzustand, nach 24 h Temperung an Luft bei 950° C und nach weiterer 100-stündiger Motoralterung gemessen, vgl. hierzu Tabelle 2.

Im Frischzustand weist der Pd/Rh-Katalysator gegenüber dem Pt/Rh-Katalysator im dynamischen Test vergleichbar hohe Konvertierungsraten auf, zeigt aber in der 50%-Konvertierung höhere Temperaturen und damit leichte Nachteile.

Noch wichtiger zur Beurteilung eines Katalysators erscheinen aber die Ergebnisse im gealterten Zustand. Hierzu wurde zunächst eine 24-stündige thermische Behandlung bei 950° C an Luft durchgeführt, die eine Prüfung der Katalysatorstabilität bei zeitweise magerer Betriebsweise des Motors ($\lambda$ >1), wie sie bei modernen Dreiwegkonzepten üblich ist, erlaubt.

Der mit hohem Ceroxidgehalt ausgestattete Pd/Rh-Katalysator weist danach eine sehr viel höhere Konvertierung im dynamischen Test sowie ein um ca. 100° C besseres Anspringverhalten als der des Pt/Rh-Katalysators. Die 50 %-Umsätze von HC und $NO_x$ liegen mit Werten > 450° C außerhalb des Bereiches üblicher Messungen und wurden daher schon nicht mehr erfaßt.

Nach zusätzlicher, 100-stündiger Motoralterung zeigt der dynamische Test wiederum eine viel höhere Konvertierung für den Pd/Rh-Katalysator. Bei der 50% Konvertierung ist dieser dem Pt/Rh-Katalysator ebenfalls deutlich überlegen; Dies dokumentiert sich besonders bei den $NO_x$-Werten.

Zusammenfassend ist nach diesen ausführlichen anwendungstechnischen Prüfungen festzuhalten, daß der hochcerhaltige Katalysator mit der preiswerteren Edelmetallkombination Pd und Rh dem Standardkatalysator mit Pt und Rh aktivitätsmäßig in den meisten Punkten deutlich überlegen und daher vorzuziehen ist.

Vergleichsbeispiel 10

Ein zylindrischer Wabenkörper aus Cordierit mit 102 mm Durchmesser, 76 mm Länge und einer Zelldichte von 62 Zellen/$cm^2$ wird durch Tauchen in eine 30 %ige wäßrige Suspension, die ein mit Calcium stabilisiertes Aluminiumoxid (80 $m^2/g$) und Ceracetat enthält, beschichtet.

Die überschüssige Suspension wird durch Ausblasen mit Druckluft entfernt und der beschichtete Monolith bei 120° C getrocknet. Dieser Beschichtungsvorgang wird gegebenenfalls wiederholt, um die gewünschte Beschichtungsmenge aufzubringen. Anschließend wird der beschichtete Monolith 45 Minuten bei 600° C getempert, wobei sich Ceracetat zu $CeO_2$ zersetzt. Die Menge und Art der aufgebrachten Oxide ist in Tabelle 3 angegeben.

Der so beschichtete Monolith wird mit einer wäßrigen Lösung aus $PdCl_2$ und $Rh(NO_3)_3$ imprägniert, die Pd und Rh im Verhältnis 5 : 1 enthält. Die aufgebrachte Edelmetallmenge beträgt 1,1 g pro Katalysator.

An die Trocknung des edelmetallimprägnierten Monolithen bei 150° C schließt sich eine zweistündige Reduktion in Formiergas ($N_2$ : $H_2$ = 95 : 5) bei 550° C an.

Vergleichsbeispiel 11

Es wurde ein Katalysator nach Vergleichsbeispiel 10 hergestellt mit dem einzigen Unterschied, daß das Verhältnis Pd : Rh nun 2,5 : 1 war.

Vergleichsbeispiel 12

Es wurde ein Katalysator nach Vergleichsbeispiel 10 hergestellt mit dem einzigen Unterschied, daß das Verhältnis Pd : Rh = 15 : 1 gewählt wurde.

Vergleichsbeispiele 13 - 16

Die Katalysatoren nach den Vergleichsbeispielen 13 - 16 unterscheiden sich von denjenigen aus Vergleichs-Beispiel 10 nur durch die aufgebrachte $CeO_2$- bzw. $Al_2O_3$-Menge.

Vergleichsbeispiel 17

Katalysator hergestellt nach Vergleichsbeispiel 10, mit dem Unterschied, daß statt Ceracetat festes $CeO_2$ (erhalten durch thermische Zersetzung von Cercarbonat an Luft bei 500° C) eingesetzt wurde.

Vergleichsbeispiel 18

Katalysator hergestellt nach Vergleichsbeispiel 10, wobei die Beschichtungssuspension Aluminiumoxid mit einer spezifischen Oberfläche von 140 $m^2$/g und Lanthanacetat enthält.

Vergleichsbeispiel 19

Katalysator hergestellt nach Vergleichsbeispiel 10, wobei die Beschichtungssuspension $Al_2O_3$ mit einer spezifischen Oberfläche von 140 $m^2$/g und Nickeloxid enthält.

Vergleichsbeispiel 20

Katalysator hergestellt nach Vergleichsbeispiel 10 mit einem $SiO_2$-stabilisierten Aluminiumoxid (120 $m^2$/g).

Vergleichsbeispiel 21

Katalysator hergestellt nach Vergleichsbeispiel 10 mit einem Aluminiumoxid (110 $m^2$/g), das mit einem Gemisch von Seltenerdoxiden (La : Nd : Pr : Ce = 61 : 21 : 8 : 10) stabilisiert ist.

Vergleichsbeispiel 22 und 23

Katalysator hergestellt nach Vergleichsbeispiel 10 mit dem einzigen Unterschied, daß die Temperung der Katalysatorvorstufe bei 900° C (0,5 h) bzw. 300° C (4 h) erfolgte.

Vergleichsbeispiel 24

Katalysator hergestellt nach Vergleichsbeispiel 10 mit dem Unterschied, daß die Beschichtung wenig $CeO_2$ (eingesetzt als Acetat), $Al_2O_3$ mit einer spezifischen Oberfläche von 140 $m^2$/g und zusätzlich $Fe_2O_3$ - (eingesetzt als Nitrat) enthielt.

Vergleichsbeispiel 25

Katalysator hergestellt nach Vergleichsbeispiel 10 mit dem Unterschied, daß - wie bei konventionellen Dreiwegkatalysatoren - Pt (aus $H_2PtCl_6$) und Rh (aus $RhCl_3$) als aktive Phase eingesetzt wurden.

Vergleichsbeispiel 26

Katalysator hergestellt nach Vergleichsbeispiel 10 mit dem einzigen Unterschied, daß der Katalysator nicht reduziert wurde.

Beispiel 1 (zur Erfindung)

Ein Katalysator mit schichtartigem Aufbau und Abmessungen, Beschichtung und Edelmetallgehalt wie in Vergleichsbeispiel 10 beschrieben, wird wie folgt hergestellt:

In einem ersten Herstellungszyklus werden 2/3 der gesamten Beschichtungsmenge aufgebracht. Der beschichtete Monolith wird getrocknet, 45 Min. bei 600°C an Luft getempert und danach mit einer $PdCl_2$-Lösung belegt, getrocknet und bei 500°C an Luft getempert.

Im zweiten Herstellungszyklus wird der Pd-haltige Monolith mit dem fehlenden Drittel der Beschichtung versehen, getrocknet und bei 600°C 45 Min. getempert. Anschließend wird er mit $Rh(NO_3)_3$-Lösung imprägniert, getrocknet und in Formiergas (5 % Wasserstoff in Stickstoff) bei 550°C 2 Stunden reduziert.

Beispiel 2

Ein Katalysator mit schichtartigem Aufbau wird hergestellt nach Beispiel 1 mit der Beschichtungssuspension aus Vergleichsbeispiel 18.

Beispiel 3

Die Katalysatoren nach den Vergleichsbeispielen 10 - 26 sowie Beispielen 1 und 2 wurden einer 24-stündigen thermischen Alterung bei 950°C an Luft unterzogen und nachfolgend mit einem synthetischen Abgasgemisch einer anwendungstechnischen Prüfung unterzogen. Hierzu wurden aus den monolithischen Katalysatoren zylindrische Probekörper mit 25 mm Durchmesser und 75 mm Länge ausgebohrt und in einem Testreaktor bei einer Raumgeschwindigkeit von 50 000 $h^{-1}$ vermessen.

| Prüfgaszusammensetzung | |
| --- | --- |
| $CO_2$ | 14 Vol. % |
| $O_2$ | 0,75 ± 0,75 Vol. % |
| CO | 1 Vol.% ± 1 Vol. % |
| $H_2$ | 0,33 Vol. % |
| $C_3H_6/C_3H_8$ (2/1) | 0,05 Vol. % |
| NO | 0,1 Vol. % |
| $H_2O$ | 10 Vol. % |
| $N_2$ | Rest |

Der dynamische Test erfolgte mit einer Frequenz von 1 Hz bei 400°C. Das Anspringverhalten wurde bei $\lambda$ = 0,995 für NO und bei $\lambda$ = 1,01 für CO und Kohlenwasserstoffe jeweils mit einer Aufheizrate von 30 °K/min. gemessen.

Die Ergebnisse der Prüfung der katalytischen Aktivität sind in Tabelle 4 zusammengestellt.

TABELLE 1 Anspringtemperatur und Schadstoffkonvertierung im Wobbeltest der Katalysatoren nach Vergl.-Beispiel 1 - 5

| Katalysator nach Verg.-Beispielen | 50% Umsatz bei T °C | | | | | | Konvertierung in % bei $\lambda=0,995$ | | | | | |
| | Frischzustand | | | 200 h Motor | | | Frischzustand | | | 200 h Motor | | |
| | $CO^{1)}$ | $HC_{1)}$ | $NO^x_{2)}$ | $CO_{1)}$ | $HC_{1)}$ | $NO^x_{2)}$ | CO | HC | $NO^x$ | CO | HC | $NO^x$ |
|---|---|---|---|---|---|---|---|---|---|---|---|---|
| 1 | 295 | 297 | 287 | 300 | 306 | 294 | 99 | 93 | 99 | 99 | 93 | 97 |
| 2 | 304 | 304 | 309 | 305 | 307 | 310 | 99 | 93 | 99 | 97 | 93 | 95 |
| 3 | 300 | 297 | 305 | 302 | 303 | 312 | 98 | 93 | 99 | 98 | 94 | 94 |
| 4 | 306 | 308 | 317 | 306 | 310 | 320 | 98 | 93 | 99 | 97 | 92 | 94 |
| 5 | 309 | 310 | 315 | 307 | 312 | 317 | 98 | 93 | 99 | 93 | | |

1) $\lambda = 1,02$

2) $\lambda = 0,984$

EP 0 314 058 B1

TABELLE 2     Vergleich der katalytischen Aktivität

| | | | Katalysator nach | |
|---|---|---|---|---|
| | | | Vergl.-Beisp. 7 | Vergl.-Beisp. 8 |

FRISCH

| | | | | |
|---|---|---|---|---|
| $T^o$ C | 50 % CO | | $303^o$ C | $297^o$ C |
| | 50 % HC | | $306^o$ C | $285^o$ C |
| | 50 % $NO_x$ | | $323^o$ C | $290^o$ C |
| KONVERTIERUNG | CO | | 97 % | 96 % |
| $\lambda$ = 0,995 | HC | | 95 % | 98 % |
| | $NO_x$ | | 96 % | 94 % |

ALTERUNG 24 h Luft

| | | | | |
|---|---|---|---|---|
| $T^o$ C | 50 % CO | | $347^o$ C | $448^o$ C |
| | 50 % HC | | $354^o$ C | n.e. |
| | 50 % $NO_x$ | | $379^o$ C | n.e. |
| KONVERTIERUNG | CO | | 89 % | 43 % |
| $\lambda$ = 0,995 | HC | | 93 % | 32 % |
| | $NO_x$ | | 65 % | 13 % |

100 h MOTORALTERUNG

| | | | | |
|---|---|---|---|---|
| $T^o$ C | 50 % CO | | $341^o$ C | $356^o$ C |
| | 50 % HC | | $351^o$ C | $357^o$ C |
| | 50 % $NO_x$ | | $378^o$ C | $448^o$ C |
| KONVERTIERUNG | CO | | 75 % | 58 % |
| $\lambda$ = 0,995 | HC | | 86 % | 70 % |
| | $NO_x$ | | 53 % | 42 % |

n.e.   50 % Konvertierung höher als $450^o$ C

TABELLE 3      Zusammensetzung der Katalysatoren der Vergl.-Beispiele 10 - 26
und der Beispiele 1 und 2

| Beispiel | Beschichtungszusammensetzung in Gramm pro Monolith | | | Verhältnis der Edelmetalle in der aktiven Phase |
|---|---|---|---|---|
| | $Al_2O_3$ | $CeO_2$ | weitere Zusätze | |
| Vgl.Bsp. 10 | 64 | 36 | 2 CaO | Pd : Rh = 5 : 1 |
| " 11 | 63 | 36 | 2 CaO | Pd : Rh = 2,5 : 1 |
| " 12 | 64 | 36 | 2 CaO | Pd : Rh = 15 : 1 |
| " 13 | 66 | 10 | 2 CaO | Pd : Rh = 5 : 1 |
| " 14 | 64 | 23 | 2 CaO | Pd : Rh = 5 : 1 |
| " 15 | 54 | 48 | 1,8 CaO | Pd : Rh = 5 : 1 |
| " 16 | 32 | 64 | 1 CaO | Pd : Rh = 5 : 1 |
| " 17 | 65 | 35 | 2 CaO | Pd : Rh = 5 : 1 |
| " 18 | 64 | 36 | 8 $La_2O_3$ | Pd : Rh = 5 : 1 |
| " 19 | 64 | 36 | 2 NiO | Pd : Rh = 5 : 1 |
| " 20 | 65 | 35 | 2,3 $SiO_2$ | Pd : Rh = 5 : 1 |
| " 21 | 66 | 36 | 4 SE-Oxide | Pd : Rh = 5 : 1 |
| " 22 | 65 | 36 | 2 CaO | Pd : Rh = 5 : 1 |
| " 23 | 64 | 36 | 2 CaO | Pd : Rh = 5 : 1 |
| " 24 | 68 | 8 | 3 $Fe_2O_3$ | Pd : Rh = 5 : 1 |
| " 25 | 65 | 36 | 2 CaO | Pt : Rh = 5 : 1 |
| " 26 | 65 | 36 | 2 CaO | Pd : Rh = 5 : 1 |
| Beispiel 1 | 64 | 36 | 2 CaO | Pd : Rh = 5 : 1 |
| " 2 | 64 | 36 | 8 $La_2O_3$ | Pd : Rh = 5 : 1 |

EP 0 314 058 B1

TABELLE 4 | Anspringverhalten und Schadstoffkonvertierungen im dynamischen Test für die Katalysatoren nach Vergl.-Beispielen 10 - 26 und Beispielen 1 und 2

| Beispiele | Anspringtemperaturen 50 % Umsatz bei T° C | | | Konvertierungen in % bei λ 0,995 | | |
|---|---|---|---|---|---|---|
| | CO* | HC* | NO$_x$** | CO | HC | NO$_x$ |
| Vgl.-Bsp. 10 | 251 | 271 | 260 | 91 | 93 | 99 |
| " " 11 | 235 | 256 | 240 | 92 | 94 | 100 |
| " " 12 | 282 | 303 | 295 | 99 | 91 | 96 |
| " " 13 | 279 | 291 | 275 | 80 | 90 | 81 |
| " " 14 | 271 | 282 | 270 | 85 | 90 | 96 |
| " " 15 | 268 | 280 | 273 | 84 | 89 | 95 |
| " " 16 | 301 | 323 | 309 | 78 | 80 | 80 |
| " " 17 | 255 | 275 | 268 | 87 | 94 | 84 |
| " " 18 | 248 | 265 | 257 | 91 | 93 | 99 |
| " " 19 | 250 | 270 | 257 | 92 | 94 | 99 |
| " " 20 | 253 | 274 | 263 | 91 | 93 | 99 |
| " " 21 | 251 | 274 | 262 | 90 | 93 | 99 |
| " " 22 | 252 | 273 | 258 | 90 | 93 | 99 |
| " " 23 | 250 | 270 | 262 | 90 | 92 | 99 |
| " " 24 | 285 | 308 | 301 | 84 | 87 | 89 |
| " " 25 | 312 | 347 | 323 | 90 | 78 | 95 |
| " " 26 | 253 | 275 | 264 | 90 | 92 | 98 |
| Beispiel 1 | 248 | 265 | 255 | 92 | 94 | 99 |
| " 2 | 247 | 267 | 258 | 92 | 94 | 99 |

\* CO und Kohlenwasserstoffe bei λ = 1,01

\*\* NO bei λ = 0,995

## Patentansprüche

1. Platin-freier Katalysator mit einem wabenförmigen inerten Träger aus Keramik oder Metall, einem Überzug aus Aluminiumoxid der Übergangsreihe, einer auf den Überzug aufgebrachten aktiven Phase aus 0,03 - 3 Gew.-% Palladium und Rhodium mit einem Gewichtsverhältnis zwischen diesen Edelmetallen von 1 : 1 bis 20 : 1 sowie einem Gehalt an Cerdioxid von 25 - 50 Gew.-%, wobei sich die Gewichtsmengen von Edelmetall, Cerdioxid und Aluminiumoxid auf 100 Gew.-% ergänzen, **gekennzeichnet durch** einen schichtartigen Aufbau des Überzugs, wobei die erste, untere Schicht Palladium und Cerdioxid und die zweite, obere Schicht Rhodium und Cerdioxid enthält.

2. Katalysator nach Anspruch 1,
   **dadurch gekennzeichnet,**
   daß bis zu 20 Gew.-% der Aluminiumoxidmenge durch die Promotoren Zirkondioxid, Lanthanoxid $La_2O_3$, Neodymoxid $Nd_2O_3$, Praseodymoxid $Pr_6O_{11}$ und/oder Nickeloxid NiO ersetzt sind.

3. Katalysator nach Anspruch 1 oder 2,
   **dadurch gekennzeichnet,**
   daß das Gitter des Aluminiumoxids durch Erdalkalimetalloxid, Siliciumdioxid, Zirkondioxid oder durch Oxide der Seltenen Erden in an sich bekannter Weise vorstabilisiert ist.

4. Katalysator nach den Ansprüchen 1 bis 3,
   **dadurch gekennzeichnet,**
   daß die Temperung der edelmetallhaltigen Schichten in einem Wasserstoff enthaltenden Gasstrom erfolgt.

5. Verfahren zur Herstellung des Katalysators nach den Ansprüchen 1 bis 4,
   **gekennzeichnet dadurch**
   Überziehen des inerten Trägers mittels einer eine lösliche und/oder eine unlösliche Cerverbindung sowie gegebenenfalls Verbindungen der Promotorelemente enthaltenden wäßrigen Aluminiumoxiddispersion, Trocknen und Tempern dieser ersten $Al_2O_3$-Schicht an Luft bei 300 - 950° C sowie Imprägnieren dieser ersten Schicht mit einer wäßrigen Palladiumsalzlösung, Trocknen und gegebenenfalls Zwischentempern, entsprechende Erzeugung einer zweiten, Cer- und gegebenenfalls Promotoren enthaltenden $Al_2O_3$-Schicht und Imprägnieren dieser zweiten $Al_2O_3$-Schicht mit wäßriger Rhodiumsalzlösung, Trocknen und abschliessendes Tempern der edelmetallhaltigen Schichten bei Temperaturen oberhalb 250° C gegebenenfalls in einem Wasserstoff enthaltenden Gasstrom.

6. Verfahren nach Anspruch 5,
   **dadurch gekennzeichnet,**
   daß das Cerdioxid als Cer(III)acetat eingebracht wird.

7. Verfahren nach Anspruch 5 oder 6,
   **dadurch gekennzeichnet,**
   daß durch Erdalkalimetalloxid, Siliciumdioxid, Zirkondioxid oder durch Oxide der Seltenen Erden in an sich bekannter Weise vorstabilisiertes Aluminiumoxid eingesetzt wird.

8. Verwendung des Katalysators nach den Ansprüchen 1 bis 4 zur gleichzeitigen Konversion von Kohlenmonoxid, Kohlenwasserstoffen und Stickoxid aus den Abgasen von Verbrennungskraftmaschinen.

**Claims**

1. Platinum-free catalyst having a honeycomb-like inert carrier of ceramic or metal, a coating of alumina of the transition series and an active phase applied to the coating and containing 0.03-3% by weight of palladium and rhodium in a weight ratio of these noble metals of 1:1 to 20:1, and containing 25-50% by weight of cerium dioxide, the weights of noble metal, cerium dioxide and alumina summing to 100% by weight, characterised by a layer-like structure of the coating, the first, lower layer containing palladium and cerium dioxide and the second, upper layer containing rhodium and cerium dioxide.

2. Catalyst according to Claim 1, characterised in that up to 20% by weight of the amount of alumina is replaced by the promoters zirconium dioxide, lanthanum oxide $La_2O_3$, neodymium oxide $Nd_2O_3$, praseodymium oxide $Pr_6O_{11}$ and/or nickel oxide NiO.

3. Catalyst according to Claim 1 or 2, characterised in that the lattice of the alumina is prestabilised by means of an alkaline earth metal oxide, silica, zirconium dioxide or by means of oxides of the rare earth metals in a manner known per se.

4. Catalyst according to Claims 1 to 3, characterised in that heating of the noble metal-containing layers is carried out in an oxygen-containing gas stream.

5. Process for the preparation of the catalyst according to Claims 1 to 4, characterised by coating of the inert carrier by means of an aqueous alumina dispersion containing a soluble and/or an insoluble cerium compound and, if required, compounds of the promoter elements, drying and heating of this first $Al_2O_3$ layer in air at 300-950°C and impregnation of this first layer with an aqueous palladium salt solution, drying and, if required, intermediate heating, corresponding production of a second $Al_2O_3$ layer containing cerium and, if required, promoters, and impregnation of this second $Al_2O_3$ layer with aqueous rhodium salt solution, drying and final heating of the noble metal-containing layers at temperatures above 250°C, if necessary in a hydrogen-containing gas stream.

6. Process according to Claim 5, characterised in that the cerium dioxide is introduced in the form of cerium(III) acetate.

7. Process according to Claim 5 or 6, characterised in that alumina prestabilised by means of an alkaline earth metal oxide, silica, zirconium dioxide or by means of oxides of the rare earth metals in a manner known per se is used.

8. Use of the catalyst according to Claims 1 to 4 for simultaneous conversion of carbon monoxide, hydrocarbons and oxides of nitrogen from the exhaust gases of internal combustion engines.

**Revendications**

1. Catalyseur dépourvu de platine avec un support inerte en forme de nid d'abeilles en céramique ou en métal, avec un recouvrement en oxyde d'aluminium de la série de transition, une phase active appliquée sur le recouvrement à base de 0,03 à 3 % en poids de palladium et de rhodium avec un rapport pondéral entre ces deux métaux allant de 1:1 à 20:1 ainsi qu'une teneur en dioxyde de cérium de 25 à 50 % en poids, catalyseur dans lequel les quantités en poids de métal noble, dioxyde de cérium, et oxyde d'aluminium se complètent à 100 % en poids, caractérisé par un assemblage du type stratifié du recouvrement dans lequel la première couche inférieure contient du palladium et du dioxyde de cérium et la seconde couche supérieure du rhodium et du dioxyde de cérium.

2. Catalyseur selon la revendication 1, caractérisé en ce que jusqu'à 20 % de la quantité d'oxyde d'aluminium est remplacé par les promoteurs dioxyde de zirconium oxyde de lanthane $La_2O_3$, oxyde de néodyme $Nd_2O_3$, oxyde de praséodyme $Pr_6O_{11}$ et/ou oxyde de nickel NiO.

3. Catalyseur selon la revendication 1 ou la revendication 2, caractérisé en ce que la maille de l'oxyde d'aluminium est stabilisée au préalable par un oxyde de métal alcalino-terreux, du dioxyde de silicium, du dioxyde de zirconium ou par des oxydes de terres rares, d'une manière connue en soi.

4. Catalyseur selon les revendications 1 à 3, caractérisé en ce que le recuit des couches renfermant le métal noble s'effectue dans un courant gazeux contenant de l'hydrogène.

5. Procédé de production du catalyseur selon les revendications 1 à 4, caractérisé par :
   - le recouvrement du support inerte à l'aide d'une dispersion aqueuse d'oxyde d'aluminium renfermant un composé de cérium soluble et/ou insoluble ainsi que le cas échéant des composés des éléments promoteurs,
   - le séchage et le recuit de cette première couche d'$Al_2O_3$ à l'air à 300-950°C ainsi que l'imprégnation de cette première couche avec une solution aqueuse d'un sel de palladium,
   - le séchage et éventuellement le recuit intermédiaire,
   - l'obtention correspondante d'une deuxième couche d'$Al_2O_3$ renfermant du cérium et le cas échéant des promoteurs et imprégnation de cette deuxième couche d'$Al_2O_3$ avec une solution aqueuse d'un sel de rhodium,

- le séchage et le recuit final des couches renfermant les métaux nobles à des températures au-dessus de 250°C, le cas échéant dans un courant gazeux renfermant de l'hydrogène.

6. Procédé selon la revendication 5, caractérisé en ce que le dioxyde de cérium est introduit sous forme d'acétate de cérium (III).

7. Procédé selon la revendication 5 ou 6, caractérisé en ce que l'on met en oeuvre de l'oxyde d'aluminium stabilisé au préalable d'une manière connue en soi par un oxyde de métal alcalino-terreux, du dioxyde de silicium, du dioxyde de zirconium ou par des oxydes de terre rare.

8. Utilisation du catalyseur selon les revendications 1 à 4 pour la conversion simultanée de l'oxyde de carbone, des hydrocarbures et de l'oxyde d'azote à partir des gaz d'échappement des moteurs à combustion interne.